# EUROPEAN PATENT APPLICATION

(11) **EP 3 252 458 A1**
(43) Date of publication of application: **06.12.2017**
(21) Application number: 16382249.7
(22) Date of filing: 01.06.2016
(51) Int. Cl.: G01N 21/95, G01C 11/00, G01B 11/00, G01B 11/24, G01B 11/245

(54) **SYSTEM AND METHOD FOR DIGITALIZING TRIDIMENSIONAL OBJECTS**

(71) Applicant: Hijos de Jose Sivo, S.L., 02660 Caudete (Albacete) (ES)
(72) Inventor: SIVÓ ROMERO, José, 02660 Caudete (Albacete) (ES)
(74) Representative: Pons

(57) **Abstract**

This document discloses a system and a method, which may be implemented using a computer, when the latter is defined as instructions on digital data supports, which make it possible to digitise three-dimensional objects more quickly and using less resources. To this end, a frame is used which comprises a number of reference marks and is positioned around the object to be digitised in the scene captured by a 3D scanner, such that the images already comprise a number of static references that allow for the assembly thereof. The frame is set in place once the spraying and coating process of the object to be digitised has been performed, such that the marks are not affected by lacquering or painting of the object.

## Description

### OBJECT OF THE INVENTION

The invention is framed within the technical field of computer-aided modelling and optical reconstruction techniques for digitised objects.

More specifically, the object of the invention is the automated digitisation of objects for the verification and quality control of three-dimensional objects, such that they may be studied and monitored on the basis of digitised three-dimensional models.

### BACKGROUND OF THE INVENTION

The use of three-dimensional scanning systems is common in different industries, such as three-dimensional modelling industries, which use this type of systems to capture data about objects in order to generate 3D models corresponding to said objects.

Three-dimensional scanning also makes it possible to obtain data about defects or flaws in an object by comparing the model obtained with a reference model corresponding to said object. This type of techniques have numerous applications; noteworthy among them, in relation to the present invention, are applications related to moulds of three-dimensional objects and the corresponding products that may be obtained therefrom.

In this regard, this type of systems are implemented in verification processes for three-dimensional objects using automated 3D scanning systems that use robots.

The use of this type of systems is well-known within the habitual technical field of this type of applications; in general, a number of marks are used which make it possible to focus and calibrate the different elements in the system, such that the different captures and positions of the objects to be verified are duly referenced. In existing systems, a number of transport trolleys are used which, in turn, use a number of carrier trays that allow for each part to reach a spraying station; the spraying is necessary for correct capture by the 3D scanning systems. For the referencing to be correct, once the object has been coated with the spray material, a number of marks (usually fiducial marks or similar) are placed which make it possible to generate reference points that form the basis for both the image capture system and the image processing system, in order to perform the verification process. These systems present several disadvantages; on the one hand, the different marks must be fixed on the objects to be verified and, consequently, a large number of reference marks are required, and their positioning when they are fixed may lead to errors; on the other hand, since it is necessary to spray-coat the object to be verified, it is necessary to wait for it to dry before the reference marks can be placed; otherwise, should they be placed on the surface and the carrier, they would disappear upon performing the spray painting that generates the necessary coating.

At present, different developments for the automated verification of three-dimensional objects are known which use robots; in this regard, one example is the German document DE102008019435, which discloses the use of three-dimensional reference marks that appear on the support of a scanning robot that carries the corresponding camera; said three-dimensional reference marks are used to assign and match the different measurements by means of a three-dimensional coordinate system in order to align two (or more) images of the three-dimensional component taken from the element mounted on the robot and accelerate the process.

JP1283120A discloses a method and a system for monitoring moulds which has a device that receives, as input, the image of the mould in motion and, by means of image processing and analysis, verifies that an entire moulded product is present in the mould, which is then expelled. The method described makes it possible to determine when a mould is damaged or a produced part is defective, by determining a correlation coefficient between light and shadows for the captures performed and the reference values; to this end, a monitoring range reference system is used which is made up of an 8 x 8 square matrix. Each element in the reference matrix has a light-and-shadows value assigned, starting with an initial x1 value that corresponds to the first element, located on the upper left-hand corner, such that, when travelling through the matrix from top to bottom, a final value of x64 is obtained on the lower right-hand corner. The same is done with the captured image, except for the fact that the values correspond to y-values; a correlation coefficient between each value is calculated, such that a correlation coefficient value is established; when said correlation coefficient value exceeds or does not reach a pre-established threshold, it is determined that the corresponding element has a flaw.

In systems and methods designed for the verification and quality control of three-dimensional objects,
- Frame: although frames are used by brands such as Siemens or Breuckman, this frame is primarily designed for Calibration of the scanner. They do NOT use it to position the photograph marks, BUT for calibration and in order to verify that the scanner is taking photographs with the necessary precision and, in the event that it is not doing so, calibrate it with the frame such that it does take them; once it has been calibrated, the frame is removed and the part is digitised without the frame, since the function thereof is calibration.

### DESCRIPTION OF THE INVENTION

The object of the invention makes it possible to perform automated dimensional verification by means of three-dimensional scanning and digitisation; this makes it possible to perform quality control and verification tasks for three-dimensional objects in a quick, efficient manner.

To this end, one aspect of the invention, associated with a verification and quality control system, relates to a frame that represents a dynamic referencing system, since it comprises reference marks and is automated in such a way that, when in operation, it automatically surrounds the object to be verified during the digitisation (three-dimensional scanning), and automatically ceases to surround it or hides when the digitisation is finished, thereby also preventing the reference marks located on the frame, and not on the parts to be digitised or at fixed positions, from getting dirty and losing efficacy when capturing said references; this makes it possible to considerably increase the precision of the digitisation process and decreases data processing times and resources; as a result, shorter working cycles than those obtained with other current means are possible.

As specified above, the frame comprises a number of reference marks that are used to reference the photographs, such that it is used to assemble the different photographs on the basis of the marks on the frame; this simplifies data processing by the software, since it allows for the photographs to be located in the correct position thanks to the marks, and provides for greater and precision whilst also saving resources, as the process software does not have to undertake as many tasks.

Another advantage of the object of the invention is that the frame allows us to capture several parts at once: not only a single part or object, but several parts located on the same plane or on planes at different heights may be digitised at the same time.

Another aspect of the invention relates to a method for verifying and performing quality controls of three-dimensional objects; to this end, in a non-limiting example wherein said three-dimensional objects are moulds, references are searched in at least one of: in the frame and in the areas between the moulds that always resemble each other. Thanks to this, the referencing is much faster, which reduces the processing times and increases the precision, since it is already known where the mould references must be taken in order for the measurements to be correct.

In general, within the field of moulds for three-dimensional objects, the parts of the mould (composed of three parts) are individually scanned or digitised: one part, then another, and so forth; using the system of the invention, a set made up of the three parts of the mould is scanned and digitised at the same time, and the subsequent process joins them together. If so desired, one or several parts may be digitised; to this end, all that needs to be done is to adjust the frame to the new needs, since, thanks to the references taken in the frame, a correct assembly of all the parts of the mould may be performed. This allows for a shorter cycle time (in order to digitise a mould, the three parts do not have to go through; instead, the three parts go through at the same time) and, thanks to the reference marks in the frame, the processing times are decreased.

Working trolleys are placed such that a carrier tray with the three-dimensional objects goes from one trolley to another; on one of trolleys, spraying of the three-dimensional object (for example, a mould or a part) is performed by means of a technique that uses spray coating of the object; this process is necessary for the image capture means, such as 3D scanners or stereoscopic cameras, to capture every detail of the geometry of the object. Once the object has been coated and essentially has had the entire surface painted and coated with the spray material, it goes, jointly with its corresponding carrier tray, to the next working trolley, where, once the carrier tray and the object to be digitised have been housed, a frame is placed which carries a number of reference marks around the object. The positioning of said frame may be performed in different ways, a preferred way being positioning by folding the frame over the trolley and, consequently, over the carrier tray; to this end, a pivoting mechanism is used which raises the frame when it is not necessary and positions it on the plane of the object or on a plane parallel to that of the object or its carrier tray; basically, by folding it over one of the sides, the frame is positioned on the same plane as that of the object or one that is very close to it when the data capture that leads to digitisation of the object is performed. In another possible embodiment, there is a vertical lift mechanism, whereby the frame is always located on a plane parallel to that of the object or its carrier tray, positioning the frame on the same plane as that of the object or one that is very close to it when the data capture that leads to digitisation of the object is performed.

Thus, unlike currently existing methodologies, reference marks are used which always appear in the same place, thereby preventing positioning errors; moreover, a lower number of reference elements, such as stickers, are used and the surface of the object is not damaged when removing and placing them. When positioning the frame, once the coating has been performed, the material used for the coating does not conceal the reference marks and these will appear in the scene captured by the 3D scanner.

It is possible to use a single working trolley, through which the different trays circulate, by defining stations along the circuit where the different processes (spraying, digitisation, etc.) are performed; this type of implementation also considers using automated systems, such that each object and its carrier tray are successively subjected to the different processes. In this embodiment, the implementation of the referencing frame is performed in the same way as the one described above for several working trolleys.

### DESCRIPTION OF THE DRAWINGS

In order to supplement the description being made, and to contribute to a better understanding of the characteristics of the invention, according to a preferred embodiment thereof, a set of drawings is attached to said description as an integral part thereof, where the following is represented for illustrative, non-limiting purposes:
Figure 1 shows a perspective view of the set of elements that make up the system of the invention in a possible embodiment thereof, wherein the frame is vertically displaced.
Figure 2 represents the object to be digitised, jointly with the articulated frame designed to be folded.
Figure 3 represents the object to be digitised, jointly with the open frame.

### PREFERRED EMBODIMENT OF THE INVENTION

One aspect of the invention is a method for digitising a three-dimensional object, which, in a preferred embodiment, is implemented in order to verify and perform quality control of moulds for containers.

To this end, a mould (3) or a part of a mould (3) for glass containers, which is a three-dimensional object (3), is placed on a carrier tray (2). In order for the different digitisation systems (4), which are robotised, automated image capture means (4), such as 3D scanners (4) configured and adapted for this purpose, to operate correctly, it is necessary to spray-coat the object (3). This is preferably performed on a working trolley, usually trolleys equipped with rollers devoted to this coating or spraying process, the trolley being accessible by another working trolley wherein digitisation of the mould (3) is to be performed; in other possible embodiments of the method of the invention, a single trolley, a trolley with rollers, is used, through which the trays circulate and which receives the different operations necessary to perform the method of the invention.

Once the mould (3) has been coated, which is called painting or spray coating, always after coating the mould (3) and preferably after the coating is dry, a frame (1) is placed which comprises a number of reference marks (11) around at least one of the visible surfaces of the mould (3); subsequently, with the frame in place, on the same plane as that of the mould (3) or one that is very close to it, three-dimensional digitisation of the mould (3) is performed. It is worth noting that the preferred embodiment of the method of the invention is automated in such a way that at least the spray coating of the mould (3) and the three-dimensional digitisation thereof, by means of image captures of the mould (3), are performed by robots directed by a control unit that synchronises the actions of each of them, as well as the passage of the carrier tray (2), with its corresponding mould (3), through the areas where the coating and the digitisation are performed.

In another possible embodiment of the object of the invention, there is no coating whatsoever of the mould (3) and the digitisation is directly performed using the frame (1) with the reference marks (11).

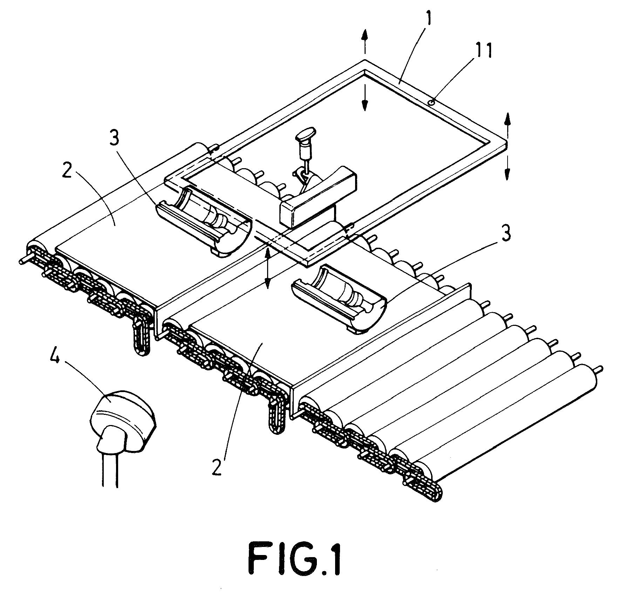

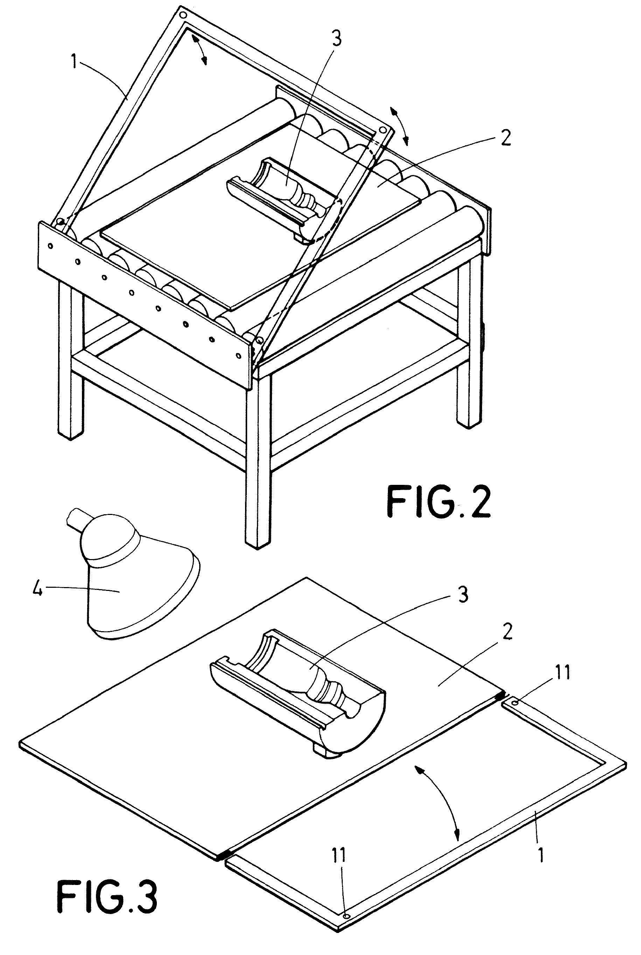

In regards to this last point, it is worth noting that the positioning of the frame (1) is also automated and controlled by the control unit, such that all the elements that intervene in performing the method of the invention are synchronised by the control unit, which may be a computer. To this end, the frame (1) may be placed in such a way that it may be folded over, as shown in Figures 2 and 3, or vertically displaced to, as observed in Figure 1, to the working trolley designed to receive the carrier tray (2) with the object (3) during the digitisation process or an auxiliary element that allows for such positioning; moreover, one of the trolleys, or the single trolley or the frame itself (1), may comprise a number of actuators and automation elements associated with at least the image capture means (4), such that the frame (1) surrounds the object to be verified when the image capture means (4) take the images as specified above.

Thus, the frame (1) acts as a referencing system for the digitisation process, which is automated, and is static during the digitisation process (since its position appears in the scene to be digitised during the scanning process); this allows us to considerably increase the precision of the digitisation and decreases the data processing time, which, in turn, allows for the working cycles to be shorter than those obtained with other current means, as the scanner can operate more efficiently. The frame (1) appears in the scene at the time of digitisation, and is concealed once again when the process automatically ends, thereby preventing, moreover, the reference marks (11) located on the frame (1), and not on the moulds (3) to be digitised or at fixed positions, once the moulds (3) have been painted, from getting dirty and losing efficacy upon taking said references.

Moreover, due to the operating system, this referencing system simplifies the work of the scanner (4) upon positioning itself and taking all the reference marks (11); this makes it possible to overlap the images captured by the scanner (4) in a simple, efficient manner, without the need for an operator to subsequently overlap the images. To this end, there is a physical support, which may be a hard drive, a memory or a carrier signal, which comprises the necessary instructions to perform the method of the invention and overlapping of the images captured by the scanner (4), since the latter comprise the reference marks (11).

## Claims

1. System for the digitisation of three-dimensional objects (3), which comprises:
• image capture means (4) designed to take images of at least one object (3) the quality whereof is to be monitored,
• a carrier tray (2) designed to carry the object (3),
the system being **characterised in that** it comprises a frame (1) designed to be positioned on the carrier tray (2) that houses the object (3), in order for the image capture means (4) to take images for the subsequent three-dimensional digitisation of said object (3); where said frame (1) comprises a number of reference marks (11).

2. Quality control system according to claim 1, wherein the frame (1) is attached to a working trolley designed to receive the carrier tray (2) with the object (3) in such a way that it may be folded.

3. Quality control system according to claims 1 or 2, wherein the frame (1) comprises a number of actuators and automation elements associated with at least the image capture means (4), such that the frame (1) surrounds the object to be verified when the image capture means (4) take the images.

4. Method for digitising three-dimensional objects (3), which comprises:
• placing at least one object (3) on a carrier tray (2),
wherein the method comprises:
• placing a frame (1), which comprises a number of reference marks (11), around the object (3), and
• performing a three-dimensional digitisation of the object (3).

5. Method according to claim 4, further comprising performing spray coating of the object (3), wherein the three-dimensional digitisation of the object (3) is performed after coating the object (3).

6. Method according to claim 4, wherein the frame (1) is set in place in an automated manner, synchronised with the movement of the carrier tray (2) to a digitisation position by means of a 3D scanner (4).

7. Method according to claim 5, wherein the spray coating of the object (3) is performed on a working trolley other than that where the digitisation of the object (3) is performed.

8. Method according to claim 4, wherein the frame (1) is placed in such a way that the frame (1) is located on the same plane as that of the object or a plane very close thereto.

9. Method according to any of claims 4 to 8, wherein the frame (1) is placed by folding it (1) over a working trolley that holds the carrier tray (2) that houses the object (3).

10. Method according to any of claims 4 to 8, wherein the frame (1) is set in place, by means of vertical displacement (1), on a working trolley which holds the carrier tray (2) that houses the object (3).

11. Physical data support, which comprises the necessary instructions for a processing unit to perform the method described in any of claims 4 to 10.
